# EUROPEAN PATENT APPLICATION

(11) **EP 2 985 819 A1**
(43) Date of publication of application: **17.02.2016**
(21) Application number: 15180492.9
(22) Date of filing: 11.08.2015
(51) Int. Cl.: H01M 4/36, C01B 25/45, H01M 4/62, H01M 4/525, H01M 10/052

(54) **POSITIVE ACTIVE MATERIAL FOR RECHARGEABLE LITHIUM BATTERY**

(30) Priority: 13.08.2014 KR 20140105151
(71) Applicant: Samsung SDI Co., Ltd., Gyeonggi-do 446-902 (KR)
(72) Inventor: LEE, Joon-Hyung, 446-902 Gyeonggi-do (KR); SHIM, Jae-Hyun, 446-902 Gyeonggi-do (KR); LEE, Ki-Soo, 446-902 Gyeonggi-do (KR); MENSHIKOV, Evgeny, 446-902 Gyeonggi-do (KR); MENSHIKOVA, Irina, 446-902 Gyeonggi-do (KR)
(74) Representative: Gulde & Partner

(57) **Abstract**

The present invention refers to a positive active material for a rechargeable lithium. The positive active material comprising a core including a compound being capable of intercalating and deintercalating lithium reversibly and a compound represented by the following Chemical Formula 1 and attached to the surface of the core:

Chemical Formula 1 Li₁₊ₓM()ₓM(II)₂₋ₓSi_{y}P_{3-y}O₁₂

wherein, M(I) and M(II) are selected from Al, Zr, Hf, Ti, Ge, Sn, Cr, Nb, Ga, Fe, Sc, In, Y, La, Lu, Mg, and Si,
0<x≤0.7, and 0 ≤ y ≤ 1.

## Description

A positive active material for a rechargeable lithium battery is disclosed.

### Description of the Related Technology

In recent times, due to reductions in size and weight of portable electronic equipment, and popularity of portable electronic devices, research activity on rechargeable lithium batteries having high energy density for power source of portable electronic devices has increased.

A rechargeable lithium battery is manufactured by using materials that intercalate or deintercalate lithium ions for negative and positive electrodes, and filling an organic electrolyte solution or a polymer electrolyte that transfer lithium ions between the positive and negative electrodes, and generates electrical energy by oxidation and reduction reactions when lithium ions are intercalated/deintercalated into the positive and negative electrodes.

This rechargeable lithium battery may use a lithium metal as a negative active material, but dendrite is formed on the surface of the lithium metal during charge and discharge and may cause a battery short circuit resulting in a battery explosion. In order to solve this problem, a carbon-based material reversibly receiving and supplying lithium ions as well as maintaining a structure and electrical property, and having a similar half-cell potential to a lithium metal during intercalation/deintercalation of lithium ions has been widely used as a negative active material.

For a positive active material of a rechargeable lithium battery, metal chalcogenide compounds being capable of intercalating and deintercalating lithium ions, and for example, composite metal oxide such as LiCoO₂ LiMn₂O₄, LiNiO₂, LiNi₁₋ₓCoₓO₂ (0<X<1), LiMnO₂, and the like has been used.

### Summary

One embodiment provides a stable positive active material at a high voltage.

Another embodiment provides a rechargeable lithium battery including the positive active material.

One embodiment provides a positive active material for a rechargeable lithium battery having at least one singlet peak at ⁷Li NMR measurement.

The positive active material may have main peaks at about -18 ppm, about 18 ppm, about 40 ppm, and about 80 ppm at ²⁷Al NMR measurement. The positive active material may have main peaks at about -29 ppm to about 9 ppm at ³¹P NMR measurement.

The main peaks of the ⁷Li NMR, ²⁷Al NMR and ³¹P NMR are measured at spinning frequency of about 12 kHz to about 35 kHz.

The positive active material includes a core including a compound being capable of intercalating and deintercalating lithium reversibly and a compound represented by the following Chemical Formula 1 and attached to the surface of the core.

Chemical Formula 1 Li₁₊ₓM(I)ₓM(II)₂₋ₓSi_{y}P_{3-y}O₁₂

In the Chemical Formula, M(I) and M(II) are selected from Al, Zr, Hf, Ti, Ge, Sn, Cr, Nb, Ga, Fe, Sc, In, Y, La, Lu, Mg, and Si,
0 < x ≤ 0.7, and 0 ≤ y ≤ 1.

In the chemical formula, M(I) may be Al and M(II) may be Ti.

The compound represented by the above Chemical Formula 1 may be present on the core in a form of a layer and/or an island.

The positive active material for a rechargeable lithium battery may include about 96 wt% to about 99.9 wt% of the core, and about 0.1 wt% to about 4 wt% of the compound represented by the above Chemical Formula 1.

The positive active material may further include Li₃PO₄ on the surface of the core.

The compound being capable of intercalating and deintercalating lithium reversibly may be LiₐCo_{1-b}G_{b}O₂ (0.90 ≤ a ≤ 1.8, 0.001 ≤ b ≤ 0.1); LiₐMn_{1-b}G_{b}O₂ (0.90 ≤ a ≤ 1.8, 0.001 ≤ b ≤ 0.1) or LiₐNi_{b}Co_{c}Mn_{d}GₑO₂ (0.90 ≤ a ≤ 1.8, 0 ≤ b ≤ 0.9, 0 ≤ c ≤ 0.5, 0 ≤ d ≤0.5, 0.001 ≤ e ≤ 0.1, and G is selected from Al, Cr, Mn, Fe, Mg, La, Ce, Sr, V, and a combination thereof).

Another embodiment provides a rechargeable lithium battery including a positive electrode including the positive active material, a negative electrode including a negative active material, and an electrolyte.

The positive active material according to one embodiment has structural stability, and thus has improved electrochemical properties such as cycle-life characteristics and the like.

### Brief Description of the Drawings

FIG. 1 is a schematic view showing a structure of a rechargeable lithium battery according to one embodiment.
FIG. 2 is a graph showing a ⁷Li ss-NMR measurement result of Li_{1.3}Al_{0.3}Ti_{1.7}(PO₄)₃ (A) used in Example 1, the positive active material (B) of Example 1, and the positive active material (C) of Comparative Example 1.
FIG. 3 is a magnified graph showing a ⁷Li ss-NMR measurement result of the positive active material of Example 1 and the positive active material of Comparative Example 2.
FIG. 4 is a graph showing a ²⁷Al ss-NMR measurement result of Li_{1.3}Al_{0.3}Ti_{1.7}(PO₄)₃ used in Example 1, the positive active material of Example 1 and the positive active material of Comparative Example 1.
FIG. 5 is a graph showing a ³¹P ss-NMR measurement result of Li_{1.3}Al_{0.3}Ti_{1.7}(PO₄)₃ used in Example 1 and the positive active material of Example 1.
FIGS. 6A and 6B are a SEM cross-sectional photograph and an EDS mapping photograph of the positive electrode after charging and discharging the battery cell using the positive active material according to Example 1.
FIGS. 7A and 7B are a SEM cross-sectional photograph and an EDS mapping photograph of the positive electrode after charging and discharging the battery cell using the positive active material according to Comparative Example 2.
FIGS. 8A and 8B are CBS (Concentric-Back-Scattered) measurement photographs of the positive active material according to Example 1.
FIG. 9A is an AFM measurement photograph of the positive active material according to Example 1.
FIG. 9B is an EFM measurement photograph of the positive active material according to Example 1.
FIG. 10 is a graph showing discharge capacity and efficiency at room temperature of the battery cells using the positive active materials according to Examples 1, 4 to 11, and Comparative Example 2.
FIG. 11 is a graph showing discharge capacity and efficiency at a high temperature of the battery cells using the positive active materials according to Examples 1, 4 to 11, and Comparative Example 2.
FIG. 12 is a graph showing high-rate capability and capacity retention at room temperature of the battery cells using the positive active materials according to Examples 1, 4 to 11, and Comparative Example 2.
FIG. 13 is a graph showing high-rate capability and capacity retention at a high temperature of the battery cells using the positive active materials according to Examples 1, 4 to 11, and Comparative Example 2.
FIG. 14 is a graph showing rate capability at room temperature of the battery cells using the positive active materials according to Example 1 and Comparative Example 1.
FIG. 15 is a graph showing rate capability at a high temperature of the battery cells using the positive active materials according to Example 1 and Comparative Example 1.
FIG. 16 is a graph showing capacity retention at room temperature of the battery cells using the positive active materials according to Example 1 and Comparative Example 1.
FIG. 17 is a graph showing capacity retention at a high temperature of the battery cells using the positive active materials according to Example 1 and Comparative Example 1.
FIG. 18 is a graph showing rate capability at room temperature of the battery cells using the positive active materials according to Examples 2 and 3, and Comparative Example 2.
FIG. 19 is a graph showing rate capability at a high temperature of the battery cells using the positive active materials according to Examples 2 and 3, and Comparative Example 2.
FIG. 20 is a graph showing capacity retention at room temperature of the battery cells using the positive active materials according to Example 2 and 3, and Comparative Example 2.
FIG. 21 is a graph showing capacity retention at a high temperature of the battery cells using the positive active materials according to Example 2 and 3, and Comparative Example 2..

### Detailed Description

Exemplary embodiments will hereinafter be described in detail

As used herein, NMR refers to ss(solid-state)-NMR, but is not limited thereto.

The positive active material according to one embodiment has at least one singlet peak at ⁷Li NMR measurement.

The singlet peak at ⁷Li NMR measurement refers to having the same electron environment around Li, and therefore means that there are no foreign particles in products, unreacted products are absent, or a compound having a desirable composition is produced. This observation means that the positive active material is structurally stable. In addition, when there are shoulder peaks on either side of the singlet peak at ⁷Li NMR measurement, capacity may be deteriorated.

In one embodiment, the positive active material may have main peaks at about -18 ppm, about 18 ppm, about 40 ppm, and about 80 ppm at ²⁷Al NMR measurement. When main peaks are shown at only 18 ppm and 80 ppm at ²⁷Al NMR measurement, the positive active material may not transfer electrons and Li⁺ ions that are produced during a Li ionization reaction in order to produce the electrons, and thus the effect to promote the transfer of Li⁺ ions and electrons may not be achieved.

The positive active material may have main peaks at about -29 ppm to about 9 ppm at ³¹P NMR measurement.

The main peaks at the ⁷Li NMR, ²⁷Al NMR and ³¹P NMR measurement results are measured under spin frequency values of 12 kHz to 35 kHz.

Performance of a battery using the positive active material for a rechargeable lithium battery according to an exemplary embodiment is not deteriorated at a voltage of less than or equal to about 4.3 V, and furthermore battery characteristics at a voltage of about 4.3 V or more, particularly about 4.3 V to about 4.7 V may be more fortified. The present disclosure may help overcome the problems in which the positive active material may be broken, as the reactivity with electrolyte at the surface of the positive active material at a high voltage is activated. That is, the reactivity of the positive active material according to an exemplary embodiment may be suppressed and thus such a problem may be prevented.

The positive active material according to one embodiment includes a core including a compound being capable of intercalating and deintercalating lithium reversibly and a compound represented by the following Chemical Formula 1 and attached to the surface of the core.

Chemical Formula 1 Li₁₊ₓM(I)ₓM(II)₂₋ₓSi_{y}P_{3-y}O₁₂

In the Chemical Formula, M(I) and M(II) are selected from Al, Zr, Hf, Ti, Ge, Sn, Cr, Nb, Ga, Fe, Sc, In, Y, La, Lu, Mg, and Si. In particular, M(I) may be Al, and M(II) may be Ti.

In addition, x and y are in each range of 0 <x ≤ 0.7 and 0 ≤ y ≤ 1. Within the ranges of the x and y, optimal electrochemical effects may be obtained.

The compound represented by Chemical Formula 1 may be present on the core in form of a layer and / or an island.

The positive active material may further include Li₃PO₄ on the surface thereof. The positive active material according to one embodiment includes a Li₃PO₄ matrix on the surface of the core, and a highly ion conductive ceramic compound particle represented by the above Chemical Formula 1 thereinside. The Li₃PO₄ is a reaction product that may be produced by a reaction at the surface during the preparation process of the positive active material, and Li₃PO₄ present at the surface improves ion conductivity. Therefore, an amount of the Li₃PO₄ is not necessary to be limited.

The compound represented by the above Chemical Formula 1 is a highly ion conductive ceramic compound. Stability at a high voltage, that is, structural stability may be ensured due to the compound on the surface of the core, electrochemical characteristic such as cycle-life characteristics may be improved.

The highly ion-conductive ceramic compound represented by the above Chemical Formula 1 has improved lithium ion conductivity, and is a semiconducting compound having a band-gap of about 2.016 eV to 2.464 eV.

Therefore, electrons and lithium ions (Li⁺) produced by oxidation reaction (a reaction to lose electrons) inside the active material during a deintercalation reaction of lithium may be easily transferred through the surface of the active material due to the highly ion-conductive ceramic compound present at the core. In other words, the compound of the above Chemical Formula 1 present at the surface of the active material may provide high ion conductivity, and semiconducting properties, the positive active material may promote transfer of electrons and Li⁺ ions that are produced during a Li ionization reaction in order to produce the electrons, and charge and discharge efficiency may be maximized.

The highly ion conductive ceramic compound represented by the above Chemical Formula 1 attached to the surface of the core may suppress a side reaction between the core and an electrolyte of the rechargeable lithium battery. In addition, Li₃PO₄ present at the surface may also improve ion conductivity.

The compound being capable of intercalating and deintercalating lithium reversibly (hereinafter, referred to be as "core compound") may be any generally-used positive active material in a positive electrode of a conventional rechargeable lithium battery. Specifically, at least one composite oxide of a metal selected from cobalt, manganese, nickel, and a combination thereof and lithium may be used. One of compounds represented by the following Chemical Formula 2 may be used.

Chemical Formula 2 LiₐA_{1-b}X_{b}D'₂ (0.90 ≤ a ≤ 1.8, 0 ≤ b ≤ 0.5); LiₐA_{1-b}X_{b}O_{2-c}D'_{c} (0.90 ≤ a ≤ 1.8, 0 ≤ b ≤ 0.5, 0 ≤ c ≤ 0.05); LiₑE_{1-b}X_{b}O_{2-c}D'_{c} (0 ≤ b ≤ 0.5, 0 ≤ c ≤ 0.05); LiₐE_{2-b}X_{b}O_{4-c}D'_{c} (0 ≤ b ≤ 0.5, 0 ≤ c ≤ 0.05); LiₐNi_{1-b-c}Co_{b}X_{c}D'_{α} (0.90 ≤ a ≤1.8, 0 ≤ b ≤ 0.5, 0 ≤ c ≤ 0.5, 0 < α ≤ 2); LiₐNi_{1-b-c}Co_{b}X_{c}O_{2-α}T'_{α} (0.90 ≤ a ≤ 1.8, 0 ≤ b ≤ 0.5, 0 ≤ c ≤ 0.05, 0 < α < 2); LiₐNi_{1-b-c}Co_{b}X_{c}O_{2-α}T'₂ (0.90 ≤ a ≤ 1.8, 0 ≤ b ≤ 0.5, 0 ≤ c ≤ 0.05, 0 < α < 2); LiₐNi_{1-b-c}Mn_{b}X_{c}D'_{α} (0.90 ≤ a ≤ 1.8, 0 ≤ b ≤ 0.5, 0 ≤ c ≤ 0.05, 0 < α ≤ 2); LiₐNi_{1-b-c}Mn_{b}X_{c}O_{2-α}T'_{α} (0.90 ≤ a ≤ 1.8, 0 ≤ b ≤ 0.5, 0 ≤ c ≤ 0.05, 0 < α < 2); LiₐNi_{1-b-c}Mn_{b}X_{c}O_{2-α}T'₂ ( 0.90 ≤ a ≤ 1.8, 0 ≤ b ≤ 0.5, 0 ≤ c ≤ 0.05, 0 < α < 2); LiₐNi_{b}E_{c}G_{d}O₂ (0.90 ≤ a ≤ 1.8, 0 ≤ b ≤ 0.9, 0 ≤ c ≤ 0.5, 0.001 ≤ d ≤ 0.1); LiₐNi_{b}Co_{c}Mn_{d}GₑO₂ (0.90 ≤ a ≤ 1.8, 0 ≤ b ≤ 0.9, 0 ≤ c ≤ 0.5, 0 ≤ d ≤0.5, 0.001 ≤ e ≤ 0.1); LiₐNi_{1-b}G_{b}O₂ (0.90 ≤ a ≤ 1.8, 0.001 ≤ b ≤ 0.1 LiₐCo_{1-b}G_{b}O₂ (0.90 ≤ a ≤ 1.8, 0.001 ≤ b ≤ 0.1); LiₐMn_{1-b}G_{b}O₂ (0.90 ≤ a ≤ 1.8, 0.001 ≤ b ≤ 0.1); LiₐMn_{2-b}G_{b}O₄ (0.90 ≤ a ≤ 1.8, 0.001 ≤ b ≤ 0.1); LiₐMn_{1-g}G_{g}PO₄ (0.90 ≤ a ≤ 1.8, 0 ≤ g ≤ 0.5); QO₂; QS₂; LiQS₂; V₂O₅; LiV₂O₅; LiZO₂; LiNiVO₄; Li_{(3-f)}J₂(PO₄)₃ (0 ≤ f ≤ 2); Li_{(3-f)}Fe₂(PO₄)₃ (0 ≤ f ≤ 2); and LiₐFePO₄(0.90 ≤ a ≤ 1.8).

In the above Chemical Formula 2, A is selected from Ni, Co, Mn, and a combination thereof; X is selected from Al, Ni, Co, Mn, Cr, Fe, Mg, Sr, V, a rare earth element, and a combination thereof, D' is selected from O, F, S, P, and a combination thereof; E is selected from Co, Mn, and a combination thereof, T' is selected from F, S, P, and a combination thereof, G is selected from Al, Cr, Mn, Fe, Mg, La, Ce, Sr, V, and a combination thereof, Q is selected from Ti, Mo, Mn, and a combination thereof, Z is selected from Cr, V, Fe, Sc, Y, and a combination thereof; and J is selected from V, Cr, Mn, Co, Ni, Cu, and a combination thereof.

The core compound may be LiₐCo_{1-b}G_{b}O₂ (0.90 ≤ a ≤ 1.8, 0.001 ≤ b ≤ 0.1); LiₐMn_{1-b}G_{b}O₂ (0.90 ≤ a ≤ 1.8, 0.001 ≤ b ≤ 0.1) or LiₐNi_{b}Co_{c}Mn_{d}GₑO₂ (0.90 ≤ a ≤ 1.8, 0 ≤ b ≤ 0.9, 0 ≤ c ≤ 0.5, 0 ≤ d ≤0.5, 0.001 ≤ e ≤ 0.1). The G-doped compounds have more excellent electron conductivity than compounds without being doped with G.

In order to improve electrochemical characteristics of the core compound, in the prior art, an oxide, hydroxide, oxyhydroxide, oxycarbonate or hydroxycarbonate compound of an element of Al, Ti, Mg or Sn, and the like may be used. However, the highly ion conductive ceramic compound of the above Chemical Formula 1 is attached to the surface of the core compound may improve stability of a rechargeable lithium battery at a high voltage more than coating the core with the above compounds.

The highly ion conductive ceramic compound represented by the above Chemical Formula 1 may be attached to the core in a form of a layer and / or an island. The island shape means that the highly ion conductive ceramic compound is present at the surface of the core discontinuously.

When the highly ion conductive ceramic compound is attached on the surface of the core in the form of a layer, a thickness thereof may be 100 nm to 150 nm. When the thickness of the coating layer is within the range, a side reaction between the core and electrolyte may be suppressed effectively while improving electrochemical characteristics.

When the highly ion conductive ceramic compound is attached to the core in an island shape, the size (average particle diameter, D50) of the highly ion-conductive ceramic compound may be 0.01 µm to 5 µm. When the size of the highly ion-conductive ceramic compound is within the range, the core may be surrounded with optimal density.

When the positive active material includes the core and the Li₃PO₄ matrix positioned at the surface of the core, a size of the highly ion-conductive ceramic compound particles positioned in the matrix may be 0.01 µm to 0.05 µm.

The core particle may be included in an amount of 96 wt% to 99.9 wt%, and the highly ion conductive ceramic compound may be included in an amount of 0.1 wt% to 4 wt% in the above positive active material for a rechargeable lithium battery. In addition, the core particle may be included in an amount of 97 wt% to 99 wt%, and the highly ion conductive ceramic compound may be included in an amount of 1 wt% to 3 wt% in the above positive active material for a rechargeable lithium battery. Within the ranges, a discharge capacity of a rechargeable lithium battery using the active material is more improved.

The positive active material according to the above exemplary embodiment includes the highly ion conductive ceramic compound positioned at the surface of a compound being capable of intercalating and deintercalating lithium reversibly, the compound being capable of intercalating and deintercalating lithium reversibly may prevent a direct contact with an electrolyte of a rechargeable lithium battery, and suppress a side reaction at a high temperature/high voltage. Therefore, stability of battery system may be ensured.

A rechargeable lithium battery using a positive active material according to an exemplary embodiment has improved high rate characteristics and battery efficiency.

Hereinafter, a method of preparing a positive active material for a rechargeable battery according to an exemplary embodiment is described.

First, an M(I) raw material, a Li raw material, a phosphate raw material, and a M(II) raw material are mixed in a solvent to prepare a first mixture. Herein, a Si raw material may be further added. The mixing ratio may be appropriately adjusted according to the composition of the intended compound of the Chemical Formula 1.

The mixing process may be performed by mixing the M(I) raw material, the Li raw material, the phosphate raw material, and the M(II) raw material in the solvent, or by dividing the process as follows depending on the kinds of the raw materials and the solvent. When the materials are mixed all together, the solvent may be a mixed solvent of the first and second solvents. The kinds of the raw materials may be adjusted according to the solvent, which may be easily understood in this art.

The mixing process may be performed by mixing a first liquid including the M(I) raw material in the first solvent, and a second liquid including the Li raw material and the phosphate raw material in the second solvent, and adding the M(II) raw material. In order to increase solubility of the first liquid, the process may be performed on a hot plate.

The first solvent may be ethanol, propanol, isopropanol, butanol, isobutanol, or a combination thereof, and the second solvent may be water.

The Li raw material may be Li₂CO₃, LiNO₃, Li₃PO₄, and the like. The M(I) raw material may be oxide, phosphate, nitrate, alkoxide, and the like of M(I). In case that M(I) is Al, examples of a Al raw material may be Al₂O₃, AlPO₄, Al(NO₃)₃·9H₂O, and the like. The M(II) raw material may be oxide, phosphate, nitrate, alkoxide, and the like of M(II). In case that M(II) is Ti, examples of a Ti raw material may be TiO₂, TiP₂O₇, titanium propoxide or titanium butoxide. The phosphate raw material may be (NH₄)₂HPO₄, NH₄H₂PO₄, Li₃PO₄, and the like. When a Si raw material is further used, examples of a Si raw material may be Si oxide, alkoxide, hydroxide, and the like.

Through the process, a sol-gel type composite is prepared, and the composite may be converted to the high ion conductivity compound represented by Chemical Formula 1 in the subsequent process.

In this way, the coating material is prepared in a solvent, that is using liquid method, and thus it has structural uniformity, uniform size, reproducibility, or coating uniformity of the final product, and has an economical merit.

Subsequently, the core compound which is the compound being capable of intercalating and deintercalating lithium, and the sol-gel type composite are mixed. The mixing process may be any process, for example a ball milling method, if the core compound and the sol-gel type composite are mixed uniformly. The ball milling method may be performed using a zirconia ball having a diameter of about 0.3 mm to about 10 mm, but is not limited thereto. A size and a shape of the ball are not limited if it does not limit effect of the present disclosure. The mixing process may be performed at about 50 rpm to about 200 rpm. The mixing process may be performed for about 1 hour to about 48 hours, and the mixing process may be adjusted according to the rate, the size of the ball and use amounts, and may be adjusted within an appropriate time to be mixed uniformly.

Subsequently, the mixture is dried and the dried product is heat-treated. The heat-treatment process may be performed at about 650 °C to about 950 °C at a temperature increase rate of about 0.1 °C/min to about 3 °C/min. After the heat-treatment process, it may be maintained at a certain temperature for maximum of 4 hours and optionally this temperature maintenance process may be skipped.

By cooling the heat-treated product, a positive active material including highly ion conductive ceramic compound attached on the surface of the core is prepared. The cooling process may be performed by natural cooling, or alternately by cooling using cooling equipment at a rate of about 2.2 °C/min to about 3.3 °C/min up to about 25 °C to about 300 °C, and then naturally cooling at less than the above temperature.

After the heat-treatment, a general sieving process may be performed in order to obtain a positive active material having a desirable diameter.

According to another embodiment, a rechargeable lithium battery includes the positive electrode, a negative electrode, and an electrolyte.

The positive electrode includes the positive active material according to one embodiment, and specifically includes a current collector and a positive active material layer formed on the current collector, and including the positive active material.

In the positive active material layer, an amount of the positive active material may be about 90 wt% to about 98 wt% based on the total weight of the positive active material layer.

The positive active material layer includes a binder and a conductive material. Herein, each amount of the binder and conductive material may be about 1 wt% to about 5 wt% based on the total weight of the positive active material layer.

The binder improves binding properties of positive active material particles with one another and with a current collector. Examples of the binder may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like.

The conductive material improves conductivity of an electrode. Any electrically conductive material may be used as a conductive material, unless it causes a chemical change. Examples of the conductive material may be a carbon-based material such as natural graphite, artificial graphite, carbon black, acetylene black, ketjen black, carbon fiber and the like; a metal-based material such as a metal powder or a metal fiber and the like of copper, nickel, aluminum, silver, and the like; a conductive polymer such as a polyphenylene derivative or a mixture thereof.

The current collector may use Al.

The positive electrode may be manufactured by a method including mixing the positive active material, the conductive material and the binder in a solvent to prepare an active material composition, and coating it on a current collector. The solvent includes N-methylpyrrolidone and the like.

The negative electrode includes a current collector and a negative active material layer formed on the current collector, and the negative active material layer includes a negative active material.

The negative active material includes a material that reversibly intercalates/deintercalates lithium ions, a lithium metal, a lithium metal alloy, a material being capable of doping/dedoping lithium, or a transition metal oxide.

The material that reversibly intercalates/deintercalates lithium ions includes a carbon material. The carbon material may be any generally-used carbon-based negative active material in a lithium ion rechargeable battery. Examples of the carbon material include crystalline carbon, amorphous carbon, and mixtures thereof. The crystalline carbon may be non-shaped, or sheet, flake, spherical, or fiber shaped natural graphite or artificial graphite. The amorphous carbon may be a soft carbon, a hard carbon, a mesophase pitch carbonization product, fired coke, and the like.

Examples of the lithium metal alloy include lithium and a metal selected from Na, K, Rb, Cs, Fr, Be, Mg, Ca, Sr, Si, Sb, Pb, In, Zn, Ba, Ra, Ge, Al, and Sn.

The material being capable of doping/dedoping lithium may include Si, a Si-C composite, SiOₓ (0 < x < 2), a Si-Q alloy (wherein Q is selected from an alkali metal, an alkaline-earth metal, a Group 13 element, a Group 14 element, a Group 15 element, a Group 16 element, a transition metal, a rare earth element, and a combination thereof, and not Si), Sn, SnO₂, Sn-R alloy (wherein R is selected from an alkali metal, an alkaline-earth metal, a Group 13 element, a Group 14 element, a Group 15 element, a Group 16 element, a transition metal, a rare earth element, and a combination thereof, and not Sn), or a composite with carbon. At least one of these materials may be mixed with SiO₂. The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, TI, Ge, P, As, Sb, Bi, S, Se, Te, Po, and a combination thereof.

The transition metal oxide may be vanadium oxide, lithium vanadium oxide or lithium titanium oxide.

In the negative active material layer, the amount of the negative active material may be about 95 wt% to about 99 wt% based on the total weight of the negative active material layer.

The negative active material layer may include a binder, and optionally a conductive material. In the negative active material layer, the amount of the binder may be about 1 wt% to about 5 wt% based on the total weight of the negative active material layer. When it further includes the conductive material, it may include about 90 wt% to about 98 wt% of the negative active material, about 1 wt% to about 5 wt% of the binder, and about 1 wt% to about 5 wt% of the conductive material.

The binder improves binding properties of negative active material particles with one another and with a current collector. The binder may be a non-water-soluble binder, a water-soluble binder, or a combination thereof.

The non-water-soluble binder may be polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, polyamideimide, polyimide, or a combination thereof.

The water-soluble binder may be a styrene-butadiene rubber, an acrylated styrene-butadiene rubber, polyvinyl alcohol, sodium polyacrylate, a copolymer of propylene and a C2 to C8 olefin, a copolymer of (meth)acrylic acid and (meth)acrylic acid alkyl ester, or a combination thereof.

When the water-soluble binder is used as the negative electrode binder, a cellulose-based compound may be further used to provide viscosity. The cellulose-based compound includes one or more of carboxylmethyl cellulose, hydroxypropylmethyl cellulose, methyl cellulose, or alkali metal salts thereof. The alkali metal may be Na, K, or Li. Such a thickener may be included in an amount of about 0.1 to about 3 parts by weight based on 100 parts by weight of the negative active material.

The conductive material is included to provide electrode conductivity. Any electrically conductive material may be used as a conductive material unless it causes a chemical change. Specific examples of the conductive material may be a carbon-based material such as natural graphite, artificial graphite, carbon black, acetylene black, ketjen black, a carbon fiber and the like, a metal-based material such as a metal powder or a metal fiber and the like of copper, nickel, aluminum, silver, and the like; a conductive polymer such as a polyphenylene derivative and the like, or a mixture thereof.

The current collector may be selected from a copper foil, a nickel foil, a stainless steel foil, a titanium foil, a nickel foam, a copper foam, a polymer substrate coated with a conductive metal, and a combination thereof.

In the non-aqueous electrolyte rechargeable battery of the present invention, the non-aqueous electrolyte includes a non-aqueous organic solvent and a lithium salt.

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, or aprotic solvent. The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like, and the ester-based solvent may include methyl acetate, ethyl acetate, n-propyl acetate, dimethylacetate, methylpropionate, ethyl propionate, γ-butyrolactone, decanolide, valerolactone, mevalonolactone, caprolactone, and the like. The ether-based solvent may include dibutyl ether, tetraglyme, diglyme, dimethoxyethane, 2-methyltetrahydrofuran, tetrahydrofuran, and the like, and the ketone-based solvent may include cyclohexanone and the like. The alcohol-based solvent include ethyl alcohol, isopropyl alcohol, and the like, and examples of the aprotic solvent include nitriles such as R-CN (where R is a C2 to C20 linear, branched, or cyclic hydrocarbon group, an aromatic ring, or an ether bond, or include a double bond), amides such as dimethylformamide, dioxolanes such as 1,3-dioxolane, sulfolanes, and the like.

The non-aqueous organic solvent may be used singularly or in a mixture. When the organic solvent is used in a mixture, the mixture ratio may be controlled in accordance with a desirable battery performance.

The carbonate-based solvent is prepared by mixing a cyclic carbonate and a linear carbonate. The cyclic carbonate and linear carbonate are mixed together in a volume ratio of about 1:1 to about 1:9. When the mixture is used as an electrolyte, it may have enhanced performance.

The organic solvent may further include an aromatic hydrocarbon-based solvent as well as the carbonate-based solvent. The carbonate-based solvent and aromatic hydrocarbon-based solvent may be mixed together in a volume ratio of about 1:1 to about 30:1.

The aromatic hydrocarbon-based organic solvent may be an aromatic hydrocarbon-based compound represented by the following Chemical Formula 2.

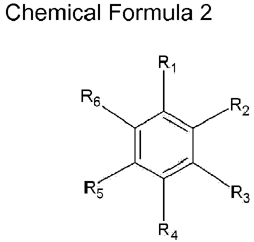

In the above Chemical Formula 2, R₁ to R₆ are the same or different and are selected from hydrogen, a halogen, a C1 to C10 alkyl group, a haloalkyl group, and a combination thereof.

Specific examples of the aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The non-aqueous electrolyte may further include vinylene carbonate or an ethylene carbonate-based compound represented by the following Chemical Formula 3 to improve cycle life.

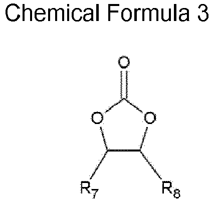

In the above Chemical Formula 3, R₇ and R₈ are the same or different and may be each independently hydrogen, a halogen, a cyano group (CN), a nitro group (NO₂), or a C1 to C5 fluoroalkyl group, provided that at least one of R₇ and R₈ is a halogen, a cyano group (CN), a nitro group (NO₂), or a C1 to C5 fluoroalkyl group, and R₇ and R₈ are not simultaneously hydrogen.

Examples of the ethylene carbonate-based compound include difluoro ethylenecarbonate, chloroethylene carbonate, dichloroethylene carbonate, bromoethylene carbonate, dibromoethylene carbonate, nitroethylene carbonate, cyanoethylene carbonate or fluoroethylene carbonate. The amount of the additive for improving cycle life may be flexibly used within an appropriate range.

The lithium salt is dissolved in an organic solvent, supplies a battery with lithium ions, basically operates the rechargeable lithium battery, and improves transportation of the lithium ions between positive and negative electrodes. Examples of the lithium salt include one or at least two supporting salt selected from LiPF₆, LiBF₄, LiSbF₆, LiAsF₆, LiN(SO₂C₂F₅)₂, Li(CF₃SO₂)₂N, LiN(SO₃C₂F₅)₂, LiC₄F₉SO₃, LiClO₄, LiAlO₂, LiAlCl₄, LiN(CₓF₂ₓ₊₁SO₂)(C_{y}F_{2y+1}SO₂) (where x and y are natural numbers, and e.g., an integer of 10 to 20), LiCl, Lil and LiB(C₂O₄)₂ (lithium bis(oxalato) borate; LiBOB). The lithium salt may be used in a concentration ranging from about 0.1 M to about 2.0 M. When the lithium salt is included at the above concentration range, an electrolyte may have excellent performance and lithium ion mobility due to optimal electrolyte conductivity and viscosity.

The rechargeable lithium battery may further include a separator between the negative electrode and the positive electrode, depending on a kind of the battery. Examples of a suitable separator material include polyethylene, polypropylene, polyvinylidene fluoride, and multi-layers thereof such as a polyethylene/polypropylene double-layered separator, a polyethylene/polypropylene/polyethylene triple-layered separator, and a polypropylene/polyethylene/polypropylene triple-layered separator.

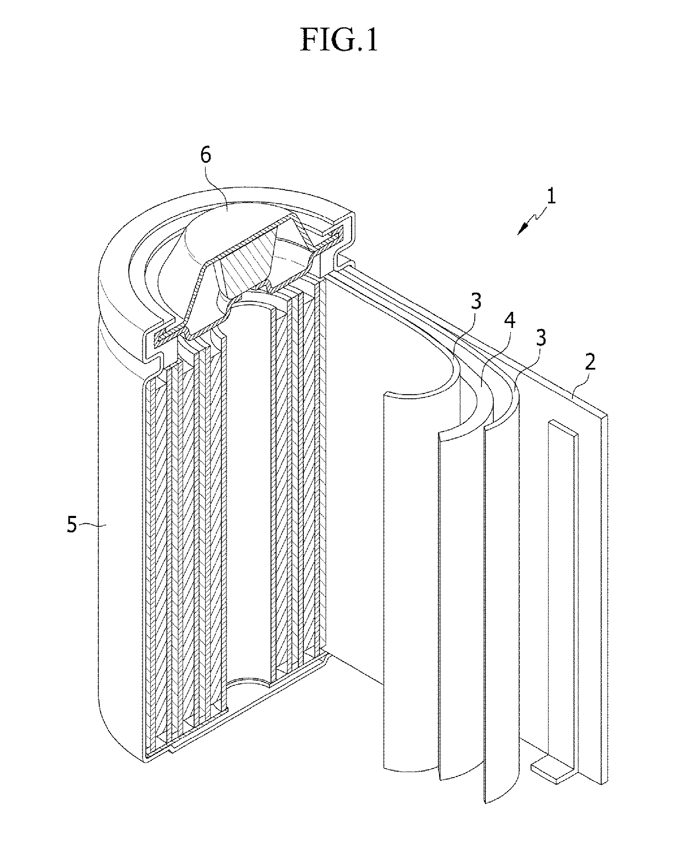

FIG. 1 is a schematic view showing a structure of a rechargeable lithium battery according to one embodiment. As shown in FIG. 1, the rechargeable lithium battery 1 is a prismatic battery that includes an electrode assembly including a positive electrode 2, a negative electrode 4, a separator 3 interposed between the positive electrode 2 and the negative electrode 4, a battery case 5, an electrolyte injected through the upper part of the battery case 5, and a cap plate 6 sealing the battery. The rechargeable lithium battery according to one embodiment is not limited to a prismatic shape, but may have a cylindrical, coin-type, or pouch shape as long as it may be operated as a battery including the positive active material for a rechargeable lithium battery according to one embodiment.

Hereinafter, the embodiments are illustrated in more detail with reference to examples.

### Example 1

0.3923 g of titanium (IV) butoxide was added to 15 g (19 ml) of ethanol in a 600 ml beaker, and the mixture was agitated at room temperature, preparing a titanium butoxide solution.

0.06079 g of lithium nitrate (LiNO₃) and 0.2340 g of ammonium phosphate (NH₄H₂PO₄) were dissolved in 8 ml of water in a 150 ml beaker, and the titanium butoxide solution was added to this solution. Subsequently, 0.07632 g of aluminum nitrate (Al(NO₃)₃·9H₂O) was added to a product therefrom.

1.125 g of a sol-gel solution was prepared through the process.

1.125 g of the sol-gel solution and 20 g of LiCo_{1-b}Mg_{b}O₂ (b = 0.0093) having an average particle diameter of 20 µm were put in a 250 ml plastic bottle, and subsequently, ball-milled at 150 rpm for one hour by using 37.5 g of a zirconia ball having a diameter of 5 mm.

Then, the obtained mixture was agitated with a magnetic stirrer in a 600 ml beaker to volatilize a solvent therein at 100 °C and then, dried at 120 °C in a convection oven for 1 hour.

The dried product was calcinated by heating it from 25 °C to 700 °C at an increase rate of 1 °C/min in an aluminum crucible equipped in an electric furnace and maintaining it at the temperature for 2.5 hours.

Subsequently, the calcinated product was naturally cooled down to 25 °C for 3 hours.

The cooled product was sieved with a 45 µm standard sieve, obtaining a positive active material of LiCo_{1-b}Mg_{b}O₂ (b = 0.0093) coated with Li_{1.3}Al_{0.3}Ti_{1.7}(PO₄)₃ (ATP) on the surface, that is, a core of LiCo_{1-b}Mg_{b}O₂ (b = 0.0093) coated with ATP as a layer. The positive active material had a size of 20 µm and included 1.3 wt% of the ATP based on the total weight of the positive active material. In addition, the ATP coating layer was 100 nm thick.

### Manufacture of Positive Electrode

Positive active material slurry was prepared by adding 94 wt% of the LiCo_{1-b}Mg_{b}O₂ (b = 0.0093) positive active material coated with the ATP, 3 wt% of carbon black as a conductive agent, and 3 wt% of polyvinylidene fluoride as a binder to an N-methylpyrrolidone (NMP) solvent. The positive active material slurry was coated on a 15 µm-thick aluminum (Al) thin film as a positive electrode current collector and then, dried and roll-pressed, manufacturing a positive electrode.

### Example 2

A LiCo_{1-b}Mg_{b}O₂ (b = 0.0093) positive active material coated with ATP Li_{1.3}Al_{0.3}Ti_{1.7}(PO₄)₃) on the surface, that is, a positive active material having a LiCo_{1-b}Mg_{b}O₂ (b = 0.0093) core and an ATP layer coated on the surface was prepared according to the same method as Example 1 except for changing each amount of titanium butoxide, lithium nitrate, ammonium phosphate monobasic and aluminum nitrate nonahydrate into 0.573 g, 0.089 g, 0.342 g and 0.112 g. The positive active material had a size of 20 µm and included 1.9 wt% of the ATP based on the entire weight of the positive active material. In addition, the ATP coating layer had a thickness ranging 100 nm to 150 nm.

### Example 3

A LiCo_{1-b}Mg_{b}O₂ (b = 0.0093) positive active material coated with ATP Li_{1.3}Al_{0.3}Ti_{1.7}(PO₄)₃) on the surface, that is, a positive active material having a core of LiCo_{1-b}Mg_{b}O₂ (b = 0.0093) and an ATP layer on the surface was manufactured according to the same method as Example 1 except for changing each amount of titanium butoxide, lithium nitrate, ammonium phosphate and aluminum nitrate into 0.543 g, 0.084 g, 0.324 g and 0.106 g. The positive active material had a size of 20 µm and included 1.8 wt% of the ATP based on the total weight of the positive active material. In addition, the ATP coating layer had a thickness ranging 100 nm to 150 nm.

### Example 4

A LiCo_{1-b}Mg_{b}O₂ (b = 0.0093) positive active material coated with ATP Li_{1.3}Al_{0.3}Ti_{1.7}(PO₄)₃) on the surface, that is, a positive active material having a core of LiCo_{1-b}Mg_{b}O₂ (b = 0.0093) and an ATP layer on the surface was prepared according to the same method as Example 1 except for changing each amount of titanium butoxide, lithium nitrate, ammonium phosphate and aluminum nitrate into 0.03018 g, 0.04676 g, 0.1800 g and 0.0587 g. The positive active material had a size of 20 µm and included 1 wt% of the ATP based on the total weight of the positive active material. In addition, the ATP coating layer had a thickness ranging from 100 nm to 150 nm.

### Example 5

A LiCo_{1-b}Mg_{b}O₂ (b = 0.0093) positive active material coated with ATP Li_{1.3}Al_{0.3}Ti_{1.7}(PO₄)₃) on the surface, that is, a positive active material having a core of LiCo_{1-b}Mg_{b}O₂ (b = 0.0093) and an ATP layer on the surface was manufactured according to the same method as Example 1 except for changing each amount of titanium butoxide, lithium nitrate, ammonium phosphate and aluminum nitrate into 0.3320 g, 0.05143 g, 0.1980 g and 0.06457 g. The positive active material had a size of 20 µm and included 1.1 wt% of the ATP based on the total weight of the positive active material. In addition, the ATP coating layer had a thickness ranging 100 nm to 150 nm.

### Example 6

A LiCo_{1-b}Mg_{b}O₂ (b = 0.0093) positive active material coated with ATP Li_{1.3}Al_{0.3}Ti_{1.7}(PO₄)₃) on the surface, that is, a positive active material having a core of LiCo_{1-b}Mg_{b}O₂ (b = 0.0093) and an ATP layer on the surface was manufactured according to the same method as Example 1 except for changing each amount of titanium butoxide, lithium nitrate, ammonium phosphate and aluminum nitrate into 0.3621 g, 0.05611 g, 0.2160 g and 0.0705 g. The positive active material had a size of 20 µm and included 1.2 wt% of the ATP based on the total weight of the positive active material. In addition, the ATP coating layer had a thickness ranging from 100 nm to 150 nm.

### Example 7

A LiCo_{1-b}Mg_{b}O₂ (b = 0.0093) positive active material coated with ATP Li_{1.3}Al_{0.3}Ti_{1.7}(PO₄)₃) on the surface, that is, a positive active material having a core of LiCo_{1-b}Mg_{b}O₂ (b = 0.0093) and an ATP layer on the surface was prepared according to the same method as Example 1 except for changing each amount of titanium butoxide, lithium nitrate, ammonium phosphate and aluminum nitrate into 0.4527 g, 0.07014 g, 0.2700 g and 0.08806 g. The positive active material had a size of 20 µm and included 1.5 wt% of the ATP based on the total weight of the positive active material. In addition, the ATP coating layer had a thickness ranging from 100 nm to 150 nm.

### Example 8

A LiCo_{1-b}Mg_{b}O₂ (b = 0.0093) positive active material coated with ATP Li_{1.3}Al_{0.3}Ti_{1.7}(PO₄)₃) on the surface, that is, a positive active material having a core of LiCo_{1-b}Mg_{b}O₂ (b = 0.0093) and an ATP layer on the surface was prepared according to the same method as Example 1 except for changing each amount of titanium butoxide, lithium nitrate, ammonium phosphate and aluminum nitrate into 0.5130 g, 0.07949 g, 0.30603 g and 0.0998 g. The positive active material had a size of 20 µm and included 1.7 wt% of the ATP based on the total weight of the positive active material. In addition, the ATP coating layer had a thickness ranging from 100 nm to 150 nm.

### Example 9

A LiCo_{1-b}Mg_{b}O₂ (b = 0.0093) positive active material coated with ATP Li_{1.3}Al_{0.3}Ti_{1.7}(PO₄)₃) on the surface, that is, a positive active material having a core of LiCo_{1-b}Mg_{b}O₂ (b = 0.0093) and an ATP layer on the surface was prepared according to the same method as Example 1 except for changing each amount of titanium butoxide, lithium nitrate, ammonium phosphate and aluminum nitrate into 0.6036 g, 0.09351 g, 0.3600 g and 0.1174 g. The positive active material had a size of 20 µm and included 2 wt% of the ATP based on the total weight of the positive active material. In addition, the ATP coating layer had a thickness ranging from 100 nm to 150 nm.

### Example 10

A LiCo_{1-b}Mg_{b}O₂ (b = 0.0093) positive active material coated with ATP Li_{1.3}Al_{0.3}Ti_{1.7}(PO₄)₃) on the surface, that is, a positive active material having a core of LiCo_{1-b}Mg_{b}O₂ (b = 0.0093) and an ATP layer on the surface was prepared according to the same method as Example 1 except for changing each amount of titanium butoxide, lithium nitrate, ammonium phosphate and aluminum nitrate into 0.9054 g, 0.14027 g, 0.5400 g and 0.17612 g. The positive active material had a size of 20 µm and included 3 wt% of the ATP based on the total weight of the positive active material. In addition, the ATP coating layer had a thickness of 100 nm to 150 nm.

### Example 11

A LiCo_{1-b}Mg_{b}O₂ (b = 0.0093) positive active material coated with ATP Li_{1.3}Al_{0.3}Ti_{1.7}(PO₄)₃) on the surface, that is, a positive active material having a core of LiCo_{1-b}Mg_{b}O₂ (b = 0.0093) and an ATP layer on the surface was prepared according to the same method as Example 1 except for changing each amount of titanium butoxide, lithium nitrate, ammonium phosphate and aluminum nitrate into 1.2701 g, 0.1870 g, 0.7200 g and 0.2348 g. The positive active material had a size of 20 µm and included 4 wt% of the ATP based on the total weight of the positive active material. In addition, the ATP coating layer had a thickness ranging from 100 nm to 150 nm.

### Comparative Example 1

900kg of LiCoO₂ having a size of 20 µm was mixed with 60L of ethanol and the resultant was mixed with an aluminum isopropoxide solution having a concentration of 0.025 kg/L (a solvent: ethanol), and this resulting mixture was heat-treated at 720°C for 5 hours to prepare a positive active material in which a surface of LiCoO₂ is coated with Al₂O₃.

### Comparative Example 2

A positive active material was prepared according to the same method as Example 1 except for using LiCoO₂.

### Manufacture of Battery Cell

Each positive electrodes according to Examples 1 to 11 and Comparative Examples 1 and 2, a Li metal as its counter electrode and an electrolyte solution including a mixture of ethylene carbonate, ethylmethyl carbonate, diethyl carbonate in a volume ratio of 3:6:1 and 1.15M LiPF₆ were used to manufacture a coin-type half-cell.

### Experimental Example

### 1. ⁷Li ss-NMR Spectrum

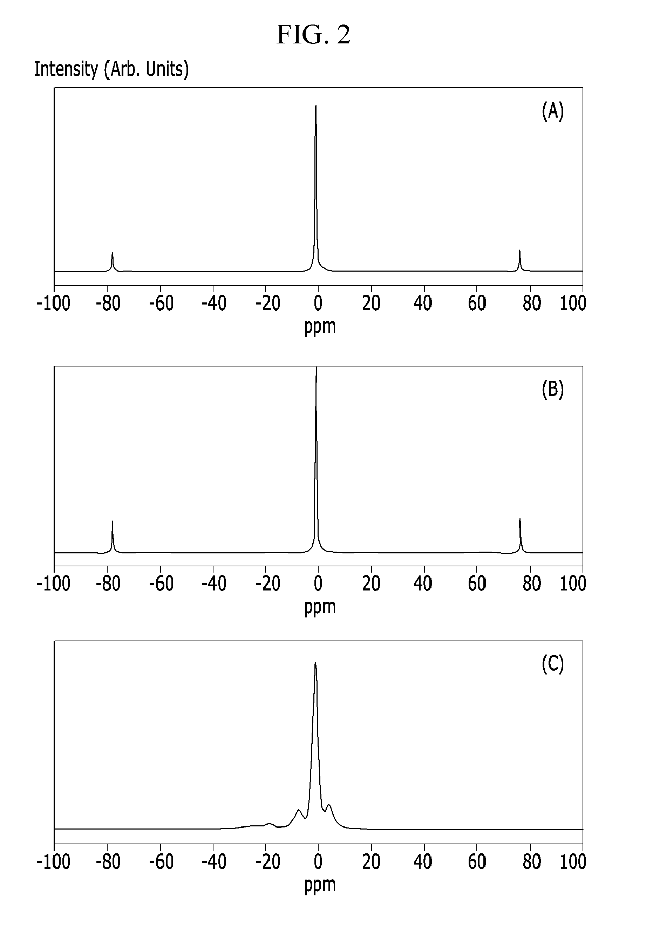

⁷Li ss-NMR of the ATP (A) used in Example 1 and the positive active materials according to Example 1 (B) and Comparative Example 1 (C) was measured, and the results are provided in FIG. 2. As shown in FIG. 2, the positive active material according to Example 1 showed more than one singlet peak likewise the ATP itself.

On the contrary, the positive active material of Comparative Example 1 showed a multiplet peak rather than a singlet peak, and the reason is that the positive active material of Comparative Example 1 included a foreign particle or a non-reaction product.

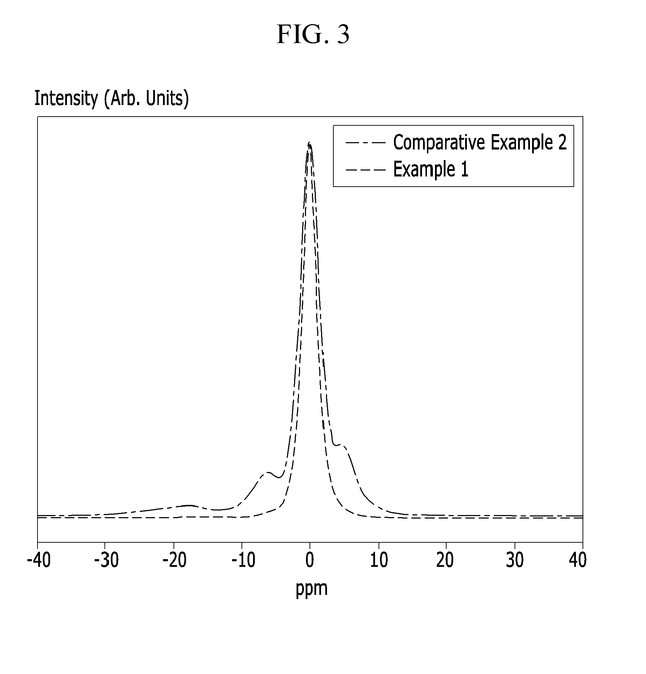

In addition, FIG. 3 shows enlarged ⁷Li ss-NMR measurement results of the positive active materials according to Example 1 and Comparative Example 2. As shown in FIG. 3, Example 1 shows a singlet peak, but Comparative Example 2 clearly shows shoulder peaks on either side of the main peak.

Based on the results provided in FIGS. 2 and 3, the positive active material according to Example 1 turned out to have excellent structural stability compared with the positive active materials according to Comparative Examples 1 and 2.

### 2. ²⁷Al ss-NMR Spectrum

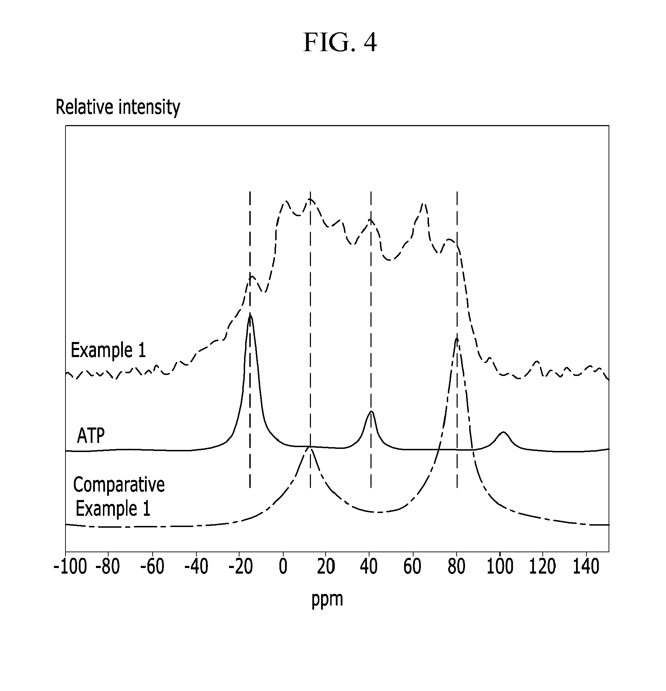

²⁷Al ss-NMR of the ATP used in Example 1 and the positive active materials according to Example 1 and Comparative Example 1 was measured, and the results are provided in FIG. 4. As shown in FIG. 4, the positive active materials according to Example 1 showed a main peat at about -18 ppm, about 18 ppm, about 40 ppm, and about 80 ppm in the ⁷Al NMR result. On the other hand, the ATP itself showed a main peak only in a range of -18 ppm and 40 ppm, and the positive active materials according to Comparative Example 1 showed a main peak in a range of 18 ppm and 80 ppm. Since the active material of Example 1 showed a main peak in a range of 18 ppm and 80 ppm, Al was diffused into the inside of the positive active material from the coated ATP and simultaneously, formed a LiAl₂O structure on a part of the surface thereof. This result shows that since the positive active material coated with Al₂O₃ showed a main peak in a range of 18 ppm and 80 ppm, the positive active material might have the Al₂O₃ coating effects.

### 3. ³¹P ss-NMR Spectrum

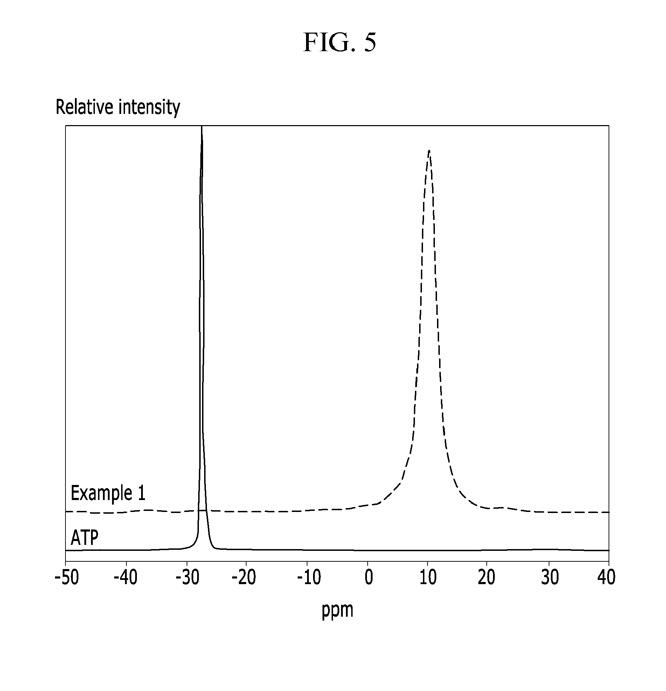

³¹P ss-NMR of the ATP according to Example 1 and the positive active material according to Example 1 was measured, and the results are provided in FIG. 5. Referring to the result of FIG. 2, the active material according to Example 1 showed very small ⁷Li peaks likewise the ATP itself, but referring to FIG. 5, ³¹P showed a main peak at about 9 ppm. Based on the results, Al existing in the ATP coated on the surface of the active material was diffused into the active material, and P existing in the ATP reacted with Li and formed Li₃PO₄.

### 4. SEM Cross-sectional Photograph and EDS (Energy Dispersive X-ray Spectrometer) Mapping Photograph

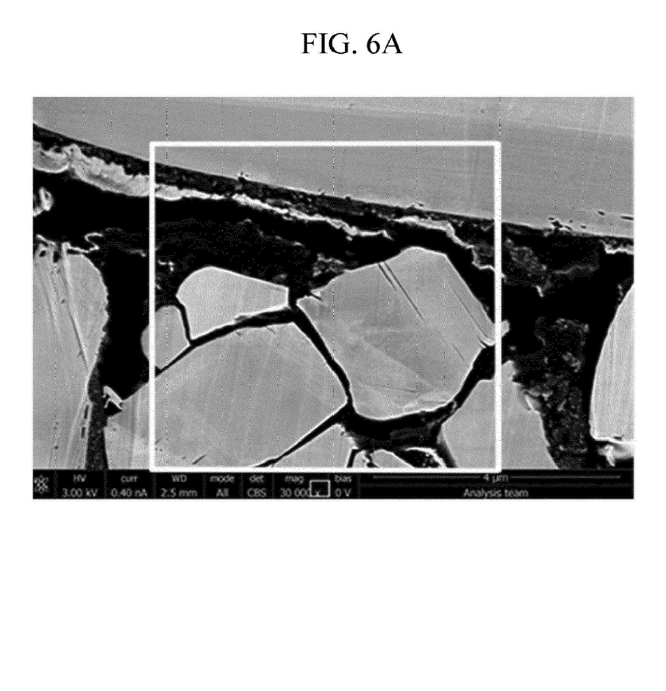

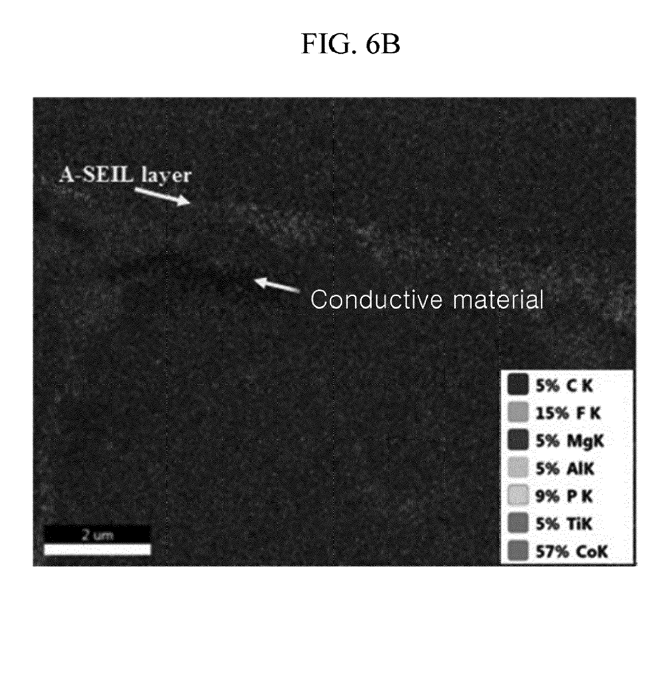

A rechargeable lithium battery cell using the positive active material according to Example 1 was 1000 times charged and discharged at 0.5 C in a range of 3.0 V to 4.5 V, and a positive electrode was separated from the cell. SEM cross-sectional and EDS mapping photographs of the separated positive electrode were taken and provided in FIGS. 6A and 6B. An A-SEIL layer in FIG. 6B indicates an ATP coating layer.

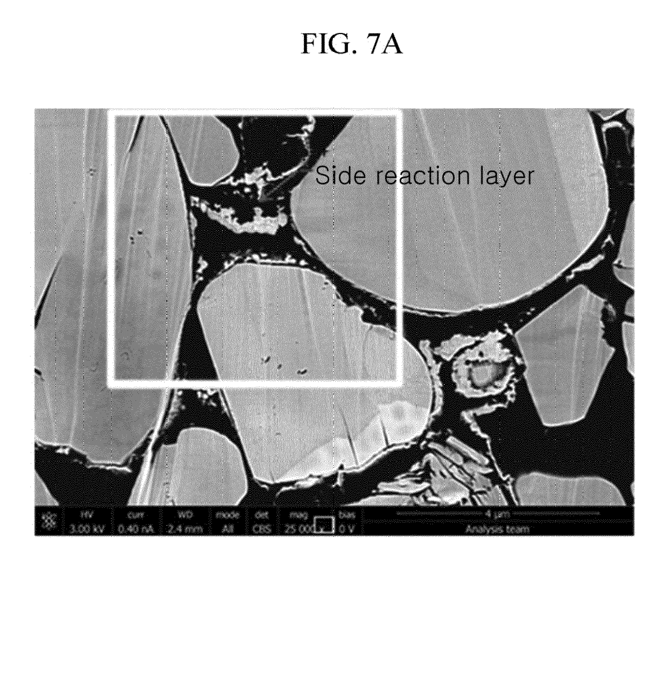

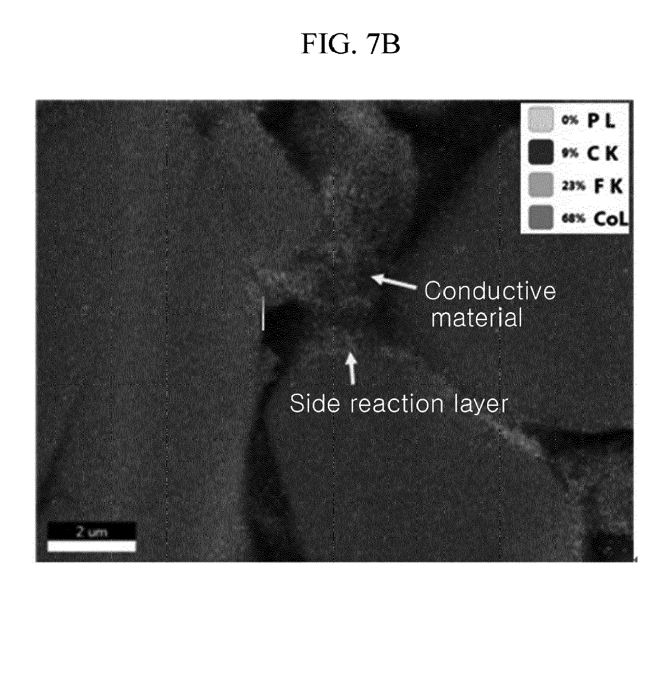

In addition, a rechargeable lithium battery cell using the positive active material according to Comparative Example 2 was 1000 times charged and discharged at 0.5 C in a range of 3.0 V to 4.5 V, and a positive electrode was separated from the cell. SEM cross-sectional and EDS mapping photographs of the separated positive electrode were taken and provided in FIGS. 7A and 7B.

As shown in FIG. 7A and 7B, when the cell using the LiCoO₂ positive active material was charged and discharged, the positive active material reacted with a side reaction product (an F component) in an electrolyte solution and formed a side reaction layer. On the other hand, the cell using the LiCoO₂ positive active material having an ATP coating layer had no side reaction layer, since the coating layer prevented a reaction of the positive active material with the electrolyte solution, as shown in FIGS. 6A and 6B.

### 5. Mg Doping Effect

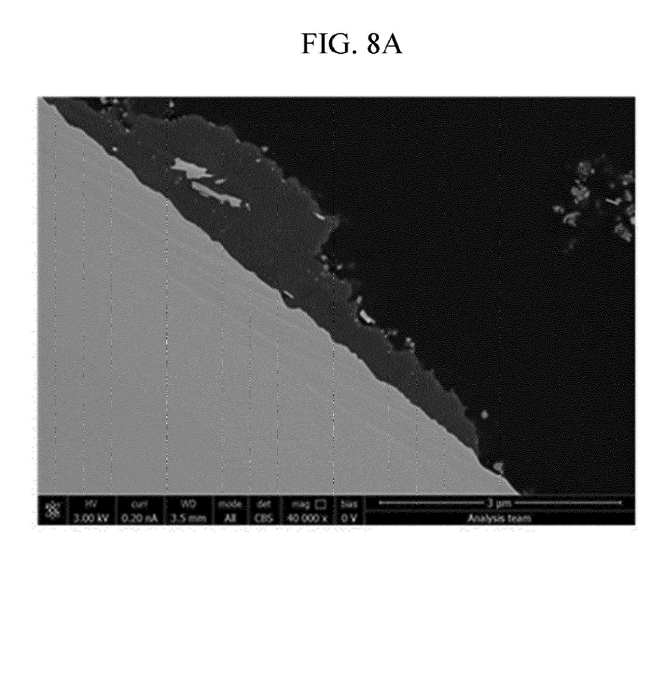

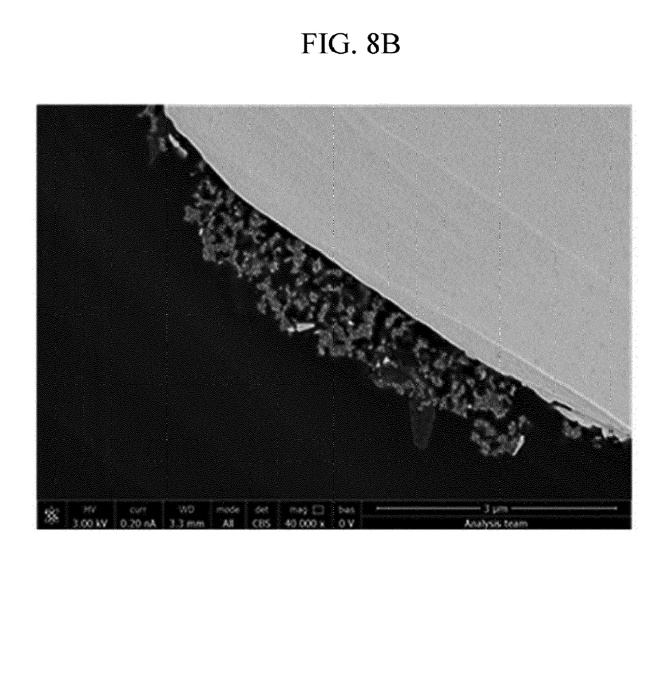

The positive active materials of Comparative Example 2 and Example 1 were examined by using a CBS (Concentric-Back-Scattered) electron microscope to examine their coating state, and the results are provided in FIGS. 8A and 8B. In FIGS. 8A and 8B, the brightest part indicates a core, and a part on the core indicates a coating layer. As shown in FIG. 8B, the positive active material of Example 1 shows a bright grain shape in the coating layer, but the positive active material of Comparative Example 2 shows no bright grain shape but only a gray coating layer as shown in FIG. 8A. In FIG. 8A, a bar shape in the coating layer indicates a space, and a particle in FIG. 8A had different form and shape from each other.

Since the CBS result were found to be brighter as electron conductivity was higher, while the CBS result were found to be darker as electron conductivity was lower, Mg was diffused into a coating layer during a heat treatment and substituted for Al therein and thus, improved conductivity of the coating layer when a doped compound using the Mg as a core was used referring to the results of FIGS. 8A and 8B.

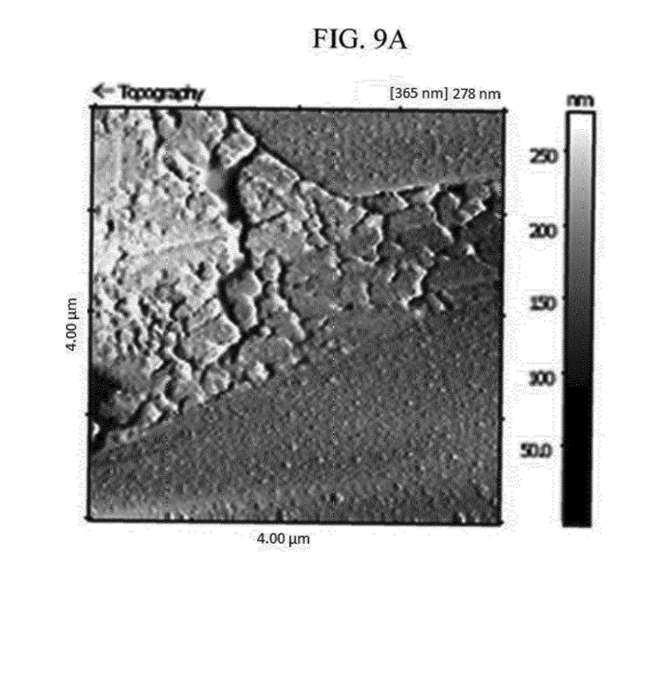

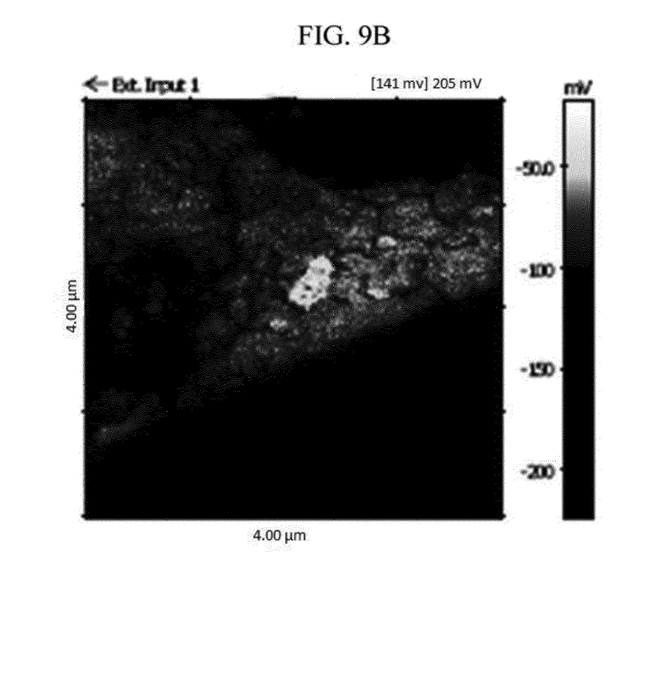

In addition, in order to examine electron conductivity of the surface of the coating layer, AFM (Atomic Force Microscope) of the positive active material according to Example 1 was measured and provided in FIG. 9A, and in addition, EFM (Electrical Force Microscope) thereof was measured and provided in FIG. 9B. In other words, the AFM measurement result of the incision surface of the active material according to Example 1 was provided in FIG. 9A, and when electrons were injected into this active material, the EFM result of measuring a voltage capable of passing a current is provided in FIG. 9B. In FIG. 9B, a voltage corresponding to a color marked in the right bar indicates that a current flows at the voltage. In other words, referring to FIGS. 9A and 9B, the active material had very excellent electron conductivity on the surface.

### 6. Discharge Capacity and Efficiency at Room Temperature (25 °C)

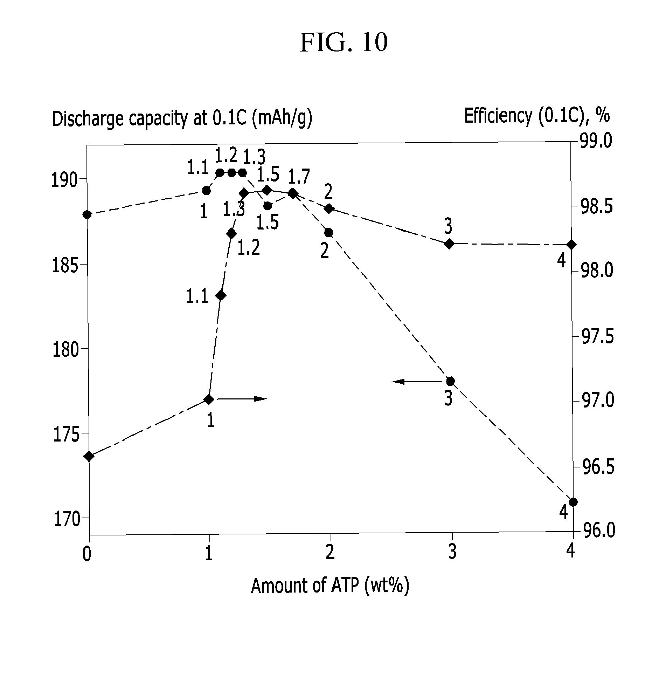

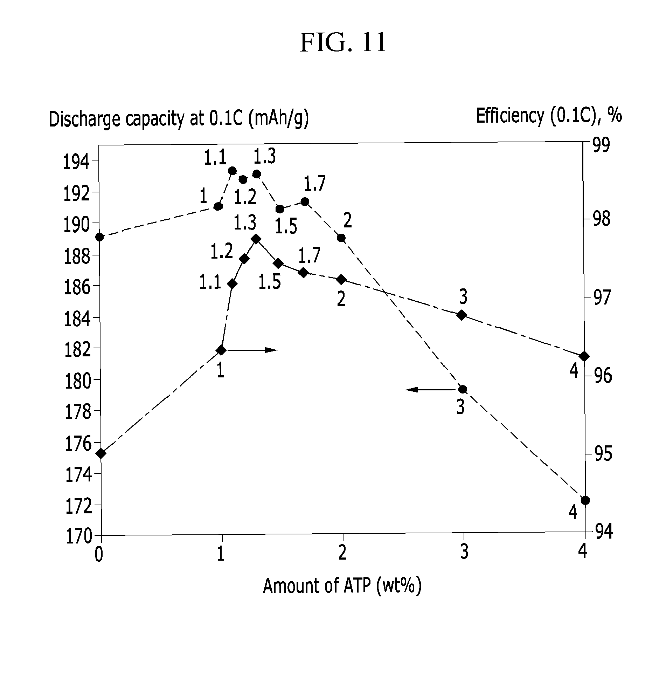

Each half-cell respectively using the positive active materials according to Examples 1 and 4 to 11 and Comparative Example 2 was charged and discharged at room temperature of 25 °C and 0.1 C, its charge and discharge capacity were measured, and only the discharge capacity was provided in FIG. 10 (● of FIG. 10). In addition, its charge and discharge efficiency was calculated and provided in FIG. 10 (■ of FIG. 10). As shown in FIG. 11, Examples 1 and 4 to 10 showed excellent capacity and efficiency characteristics compared with Comparative Example 2.

### 7. Discharge Capacity and Efficiency at High Temperature (60 °C)

Each half-cell respectively using the positive active materials according to Examples 1 and 4 to 11 and Comparative Example 2 was charged and discharged at a high temperature of 60 °C and 0.1 C, its charge and discharge capacity was measured, and only the discharge capacity was provided in FIG. 11 (● of FIG. 11). In addition, its charge and discharge efficiency was measured and provided in FIG. 11 (■ of FIG. 11). As shown in FIG. 11, Examples 1 and 4 to 11 showed excellent capacity and efficiency characteristics compared with Comparative Example 2.

### 8. Capacity Characteristics and Capacity Retention at Room Temperature (25 °C)

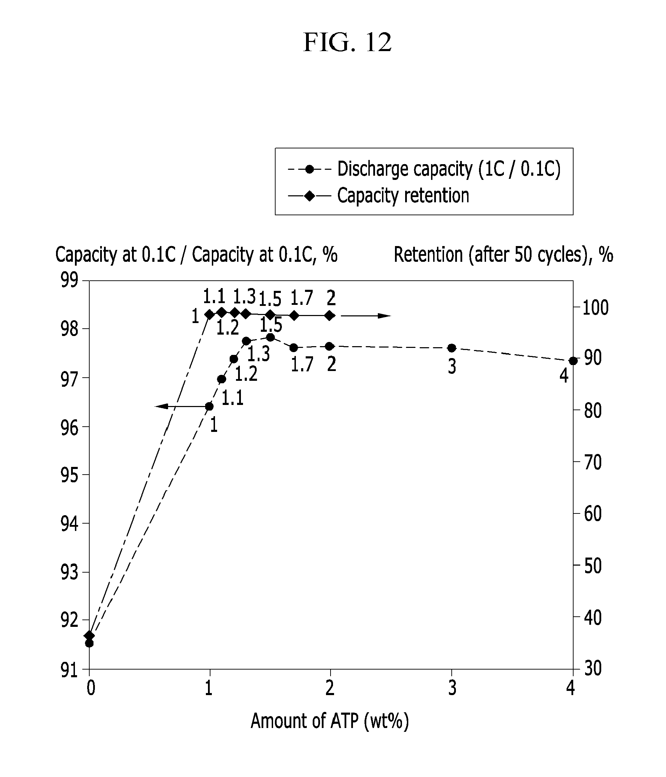

Each half-cell respectively using the positive active materials according to Examples 1 and 4 to 11 and Comparative Example 2 was once charged and discharged at room temperature of 25 °C and 0.1 C and then, 50 times charged and discharged at 1 C. Capacity characteristics of the cell are calculated as a ratio (%) of 1C discharge capacity relative to 0.1C discharge capacity and provided in FIG. 12. In addition, capacity retention (%) of the cell was calculated as a percentage of discharge capacity at 1C during 50th charge and discharge relative to discharge capacity at 1C during 1st charge and discharge and provided in FIG. 12.

As shown in FIG. 12, Examples 1 and 4 to 11 showed excellent capacity characteristics and capacity retention at room temperature compared with Comparative Example 2.

### 9. Capacity Characteristics and Capacity Retention at High Temperature (60 °C)

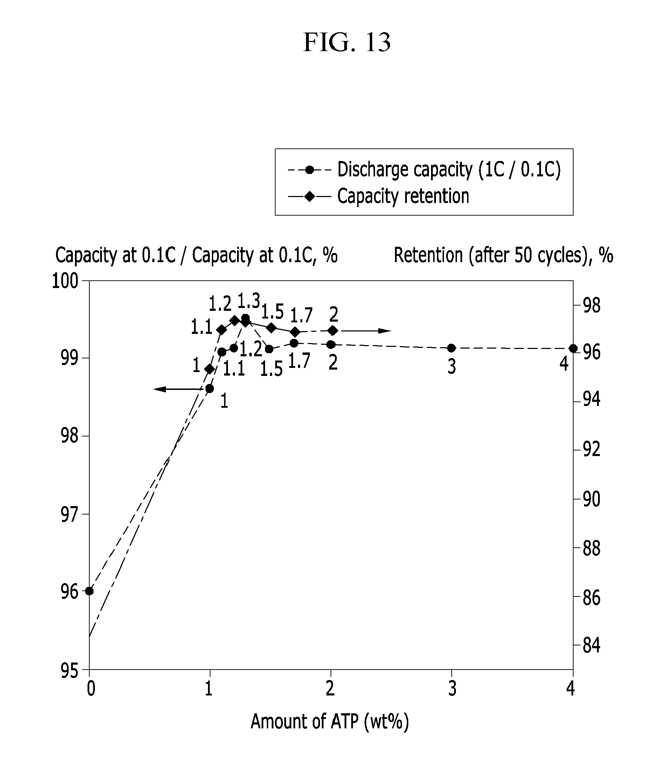

The rechargeable lithium battery cells respectively using the positive active materials according to Examples 1 and 4 to 11 and Comparative Example 2 were once charged and discharged at a high temperature (60 °C) and 0.1 C and then, 50 times charged and discharged at 1 C. The capacity characteristics were calculated as a percentage of a ratio (%) of 1C discharge capacity relative to 0.1C discharge capacity and provided in FIG. 13. In addition, capacity retention (%) of the cell was calculated as a percentage of 1C discharge capacity during 50th charge and discharge relative to 1 C discharge capacity during 1st charge and discharge and provided in FIG. 13.

As shown in FIG. 13, Examples 1 and 4 to 11 showed excellent capacity characteristics and capacity retention at high temperature compared with Comparative Example 2.

### 10. Rate Capability at Room Temperature (25 °C)

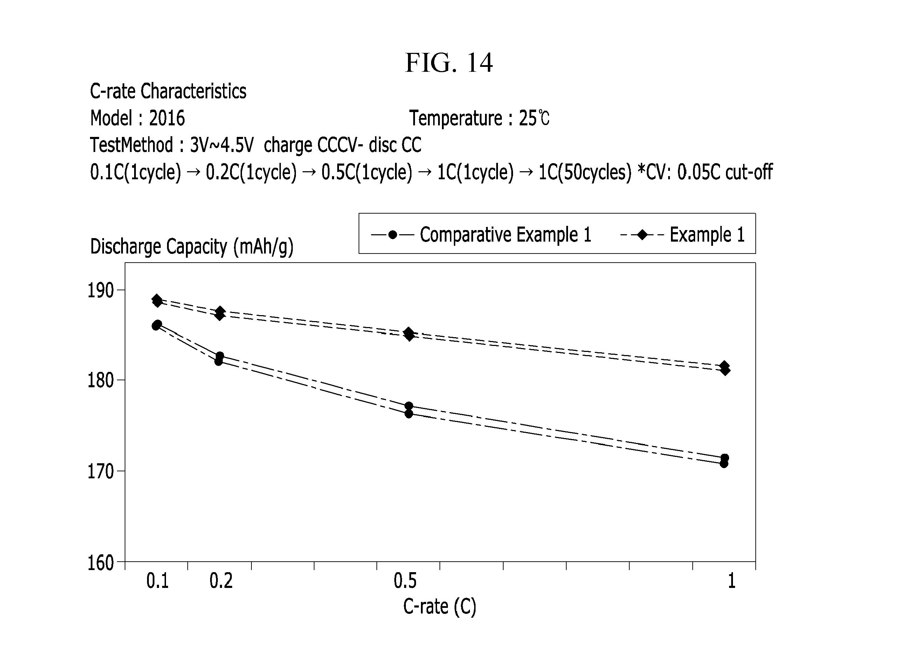

Each half-cell respectively using the positive active materials according to Example 1 and Comparative Example 1 was respectively once charged and discharged at 0.1 C, 0.2 C, 0.5 C and 1 C and room temperature of 25 °C in a range of 3 V to 4.5 V under a cut-off condition at 0.05 C and a condition of a constant current and constant voltage charge and a constant current discharge and then, 50 times charged and discharged at 1 C. The same experiment was twice performed, and discharge capacity at each rate was measured and provided in FIG. 14. As shown in FIG. 14, the rechargeable lithium battery cell using the positive active material of Example 1 showed excellent discharge capacity at every rate compared with that of Comparative Example 1.

### 11. Rate Capability at High Temperature (60 °C)

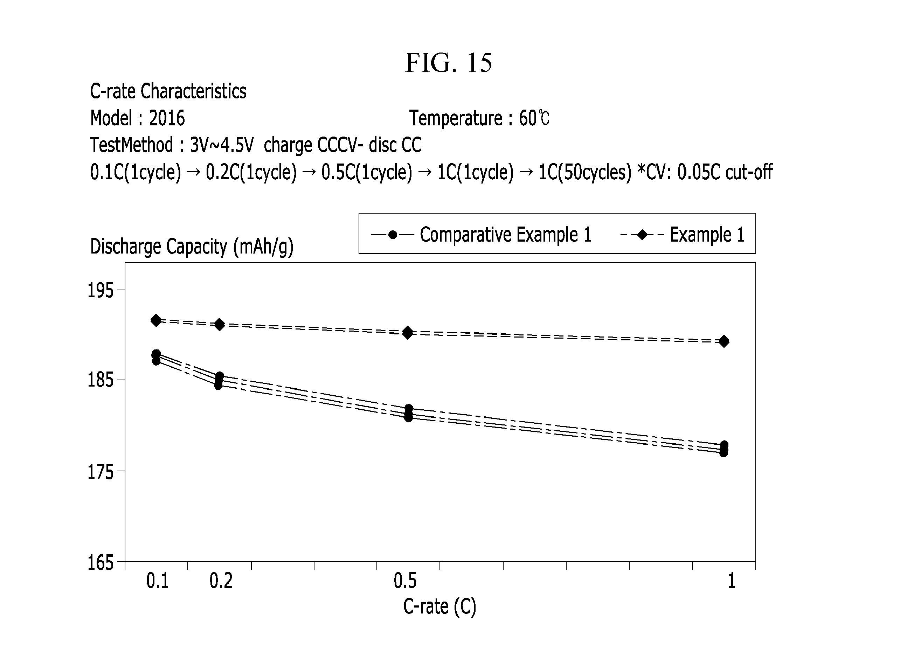

A half-cell respectively using the positive active materials according to Example 1 and Comparative Example 1 was each once charged and discharged at 0.1 C, 0.2 C, 0.5 C and 1 C at a high temperature of 60 °C in a range of 3V to 4.5V under a condition of cut-off at 0.05 C and a condition of a constant current and constant voltage charge and a constant current discharge and then, 50 times charges and discharged at 1 C. Discharge capacity at each rate was measured and provided in FIG. 15. As shown in FIG. 15, the rechargeable lithium battery cell using the positive active material of Example 1 showed excellent discharge capacity at each rate compared with Comparative Example 1.

### 12. Cycle-life Characteristics at Room Temperature (25 °C)

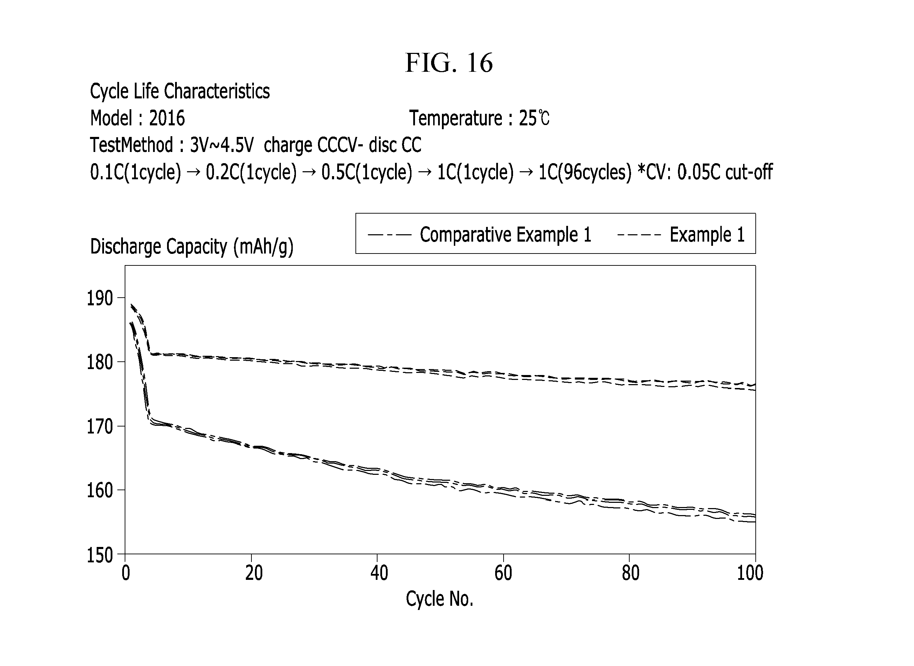

Each half-cell respectively using the positive active materials according to Example 1 and Comparative Example 1 was each once charged and discharged at 0.1 C, 0.2 C, 0.5 C and 1 C at a high temperature of 60 °C in a range of 3 V to 4.5 V under a 0.05 C cut-off condition and a condition of a constant current and constant voltage charge and a constant current discharge and then, 96 times charged and discharged at 1 C. Discharge capacity at each cycle was provided in FIG. 16. As shown in FIG. 16, the cell using the positive active material of Example 1 showed excellent cycle-life characteristics compared with the cell using the positive active material of Comparative Example 1.

### 13. Cycle-life Characteristics at High Temperature (60 °C)

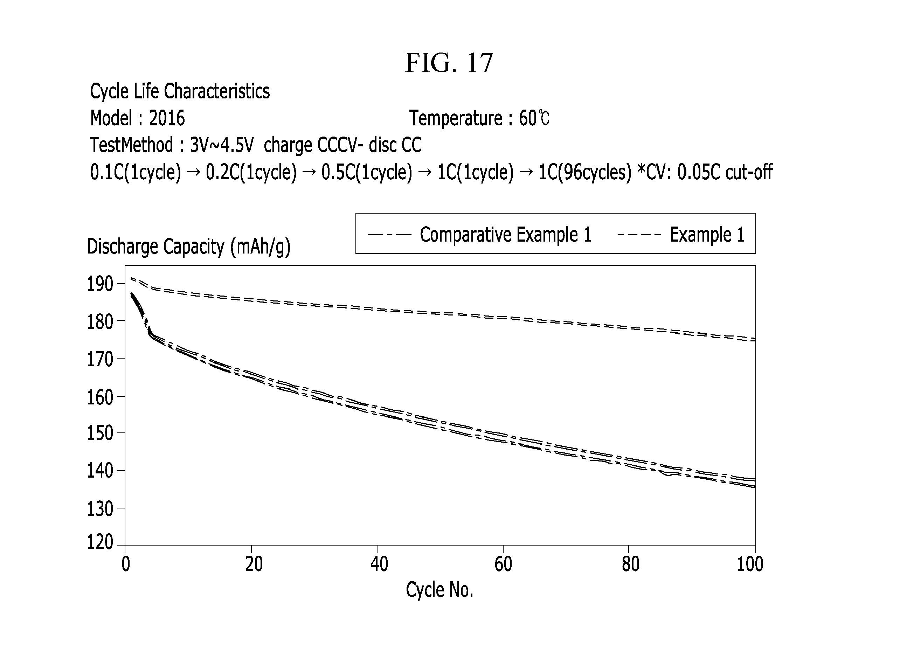

Each half-cell respectively using the positive active materials according to Example 1 and Comparative Example 1 was each once charged and discharged at 0.1 C, 0.2 C, 0.5 C and 1 C at a high temperature of 60 °C in a range of 3 V to 4.5 V under a 0.05C cut-off condition and a condition of a constant current and constant voltage charge and a constant current discharge and then, 96 times charged and discharged at 1 C. Discharge capacity at each cycle was measured and provided in FIG. 17. As shown in FIG. 17, the cell using the positive active material of Example 1 showed excellent cycle-life characteristics compared with the cell using the positive active material of Comparative Example 1.

### 14. Rate Capability at Room Temperature (25 °C)

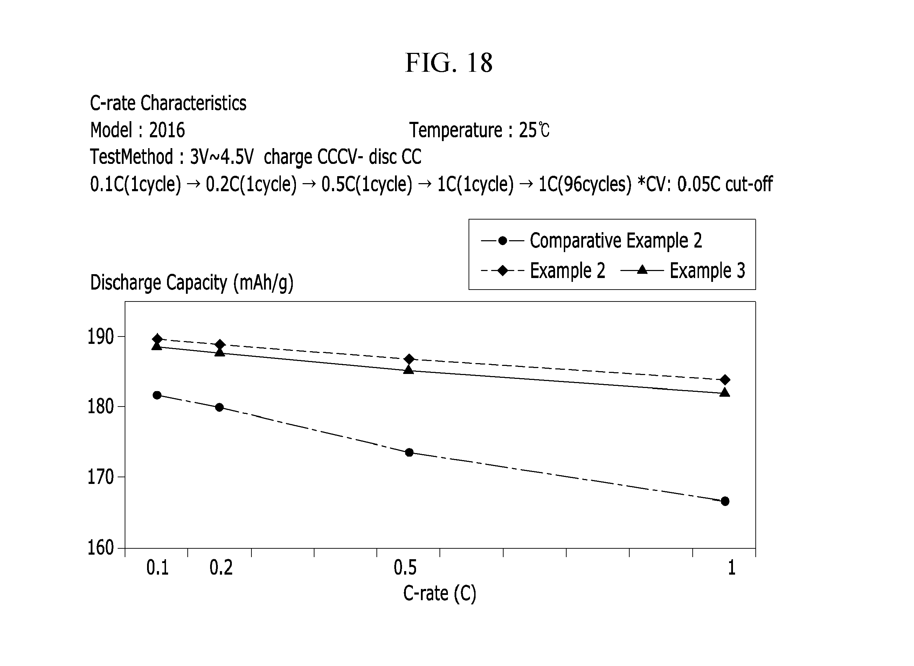

Each half-cell respectively using the positive active material according to Examples 2 and 3 and Comparative Example 2 was each once charged and discharged at 0.1 C, 0.2 C, 0.5 C and 1 C at room temperature of 25 °C in a range of 3 V to 4.5 V under a 0.05 C cut-off condition and a condition of a constant current and constant voltage charge and a constant current discharge and then, 96 times charged and discharged at 1 C. The same experiment was twice performed, and discharge capacity at each rate was measured and provided in FIG. 18. As shown in FIG. 18, the rechargeable lithium battery cells using the positive active materials of Examples 2 and 3 showed excellent discharge capacity at every rate compared with the cell using the positive active material of Comparative Example 2.

### 15. Rate Capability at High Temperature (60 °C)

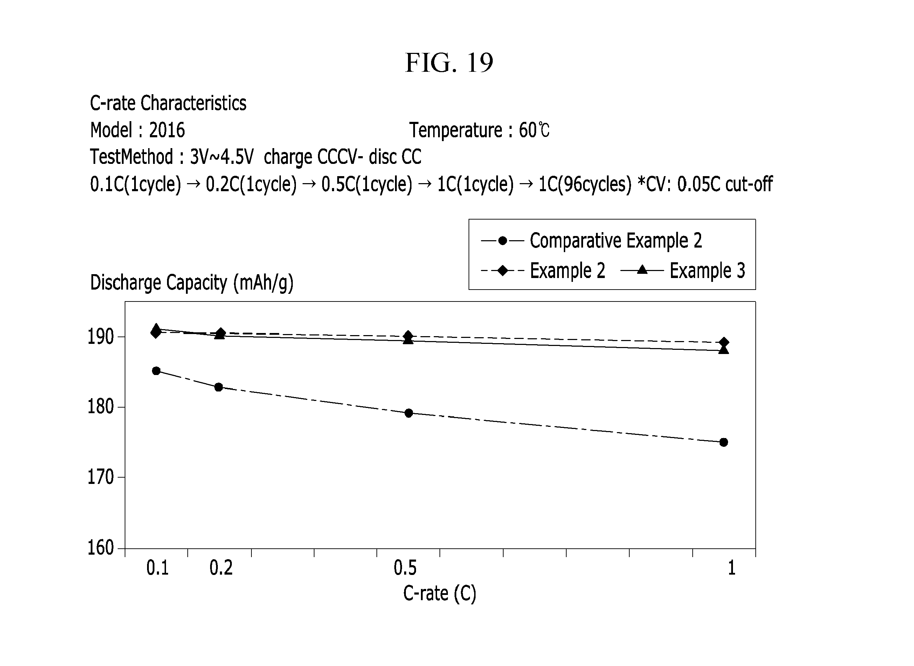

Each half-cell respectively using the positive active materials of Examples 2 and 3 and Comparative Example 2 was each once charged and discharged at 0.1 C, 0.2 C, 0.5 C and 1 C at a high temperature of 60°C in a range of 3 V to 4.5 V under a 0.05 C cut-off condition and a condition of a constant current and constant voltage charge and a constant current discharge and then, 96 times charged and discharged at 1 C. Discharge capacity at each rate was measured and provided in FIG. 19. As shown in FIG. 19, the rechargeable lithium battery cells using the positive active material of Examples 2 and 3 showed excellent discharge capacity at every rate compared with the cell using the positive active material of Comparative Example 2.

### 16. Cycle-life Characteristics at Room Temperature (25 °C)

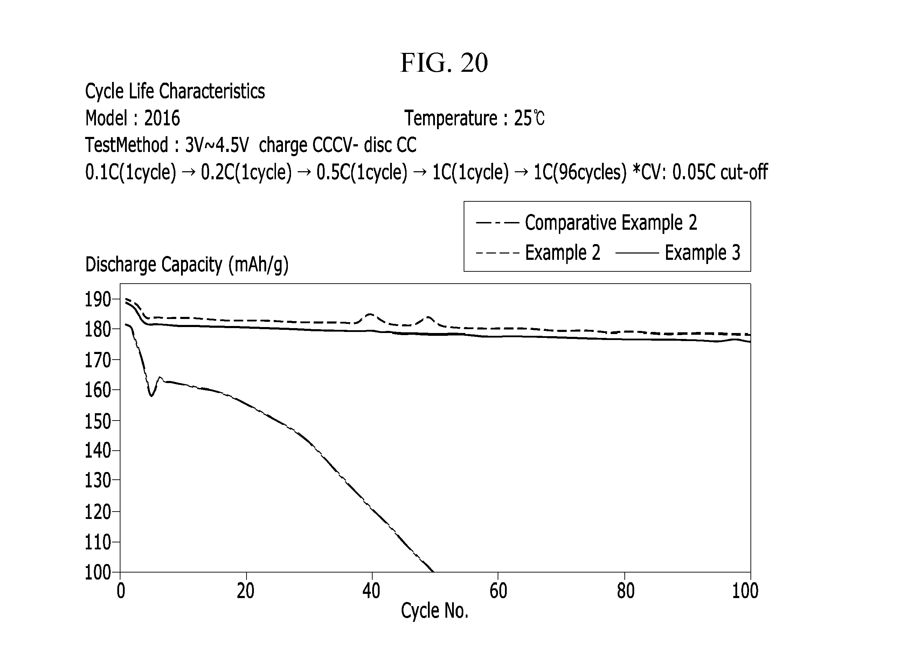

Each half-cell respectively using the positive active materials of Examples 2 and 3 and Comparative Example 2 was each once charged and discharged at 0.1 C, 0.2 C, 0.5 C and 1 C at a high temperature of 25 °C in a range of 3 V to 4.5 V under a 0.05C cut-off condition and a condition of a constant current and constant voltage charge and a constant current discharge and then, 96 times charged and discharged at 1 C. Discharge capacity at each cycle was measured and provided in FIG. 20. As shown in FIG. 20, the cells using the positive active materials of Examples 2 and 3 showed excellent cycle-life characteristics compared with the cell using the positive active material of Comparative Example 2.

### 17. Cycle-life Characteristics at High Temperature (60 °C)

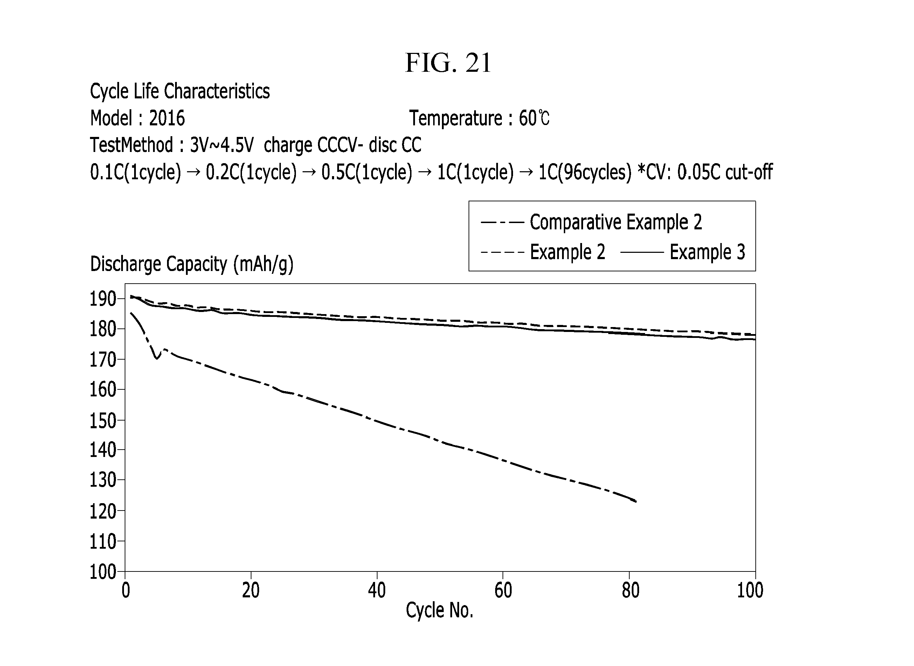

Each half-cell respectively using the positive active materials of Examples 2 and 3 and Comparative Example 2 was each once charged and discharged at 0.1 C, 0.2 C, 0.5 C and 1 C at a high temperature of 60 °C in a range of 3 V to 4.5 V under a 0.05 C cut-off condition and a condition of a constant current and constant voltage charge and a constant current discharge and then, 96 times charged and discharged at 1 C. Discharge capacity at each cycle was measured and provided in FIG. 21. As shown in FIG. 21, the cells using the positive active materiasl of Examples 2 and 3 showed excellent cycle-life characteristics compared with the cell using the positive active material of Comparative Example 2.

## Claims

1. A positive active material for a rechargeable lithium, the positive active material comprising a core including a compound being capable of intercalating and deintercalating lithium reversibly and a compound represented by the following Chemical Formula 1 and attached to the surface of the core:
Chemical Formula 1 Li₁₊ₓM(I)ₓM(II)₂₋ₓSi_{y}P_{3-y}O₁₂
wherein, M(I) and M(II) are selected from Al, Zr, Hf, Ti, Ge, Sn, Cr, Nb, Ga, Fe, Sc, In, Y, La, Lu, Mg, and Si,
0 <x ≤0.7, and 0 ≤y≤ 1.

2. The positive active material for a rechargeable lithium battery of claim 1, wherein M(I) is Al and M(II) is Ti.

3. The positive active material for a rechargeable lithium battery of claim 2, wherein the compound represented by the above Chemical Formula 1 is present on the core in a form of a layer and/or an island.

4. The positive active material for a rechargeable lithium battery of claim 1, wherein the positive active material for a rechargeable lithium battery comprises 96 wt% to 99.9 wt% of the core, and 0.1 wt% to 4 wt% of the compound represented by the above Chemical Formula 1.

5. The positive active material for a rechargeable lithium battery of claim 4, wherein the positive active material further comprises Li₃PO₄ on the surface of the core and wherein the Li₃PO₄ provides a matrix on the surface of the core into which highly ion conductive ceramic compound particles represented by the above Chemical Formula 1 are embedded.

6. The positive active material for a rechargeable lithium battery of claim 1, wherein the core compound being capable of intercalating and deintercalating lithium reversibly is LiₐCo_{1-b}G_{b}O₂ (0.90 ≤ a ≤ 1.8, 0.001 ≤ b ≤ 0.1); LiₐMn_{1-b}G_{b}O₂ (0.90 ≤ a ≤ 1.8, 0.001 ≤ b ≤ 0.1) or LiₐNi_{b}Co_{c}Mn_{d}GₑO₂ (0.90 ≤ a ≤ 1.8, 0 ≤ b ≤ 0.9, 0 ≤ c ≤ 0.5, 0 ≤ d ≤0.5, 0.001 ≤ e ≤ 0.1), and G is selected from Al, Cr, Mn, Fe, Mg, La, Ce, Sr, V, and a combination thereof.

7. The positive active material for a rechargeable lithium battery of claim 3, wherein a thickness of the layer or the island is 100 nm to 150 nm.

8. The positive active material for a rechargeable lithium battery of claim 3, wherein the compound represented by the Chemical Formula 1 is attached to the core in the form of an island and the size thereof is 0.01 µm to 5 µm.

9. A rechargeable lithium battery comprising
a positive electrode comprising a positive active material of one of the preceding claims
a negative electrode comprising a negative active material, and
an electrolyte.
